# EUROPEAN PATENT APPLICATION

(11) **EP 3 865 459 A1**
(43) Date of publication of application: **18.08.2021**
(21) Application number: 20382104.6
(22) Date of filing: 13.02.2020
(51) Int. Cl.: C02F 1/467, C02F 1/72, C02F 1/461

(54) **WATER-PROCESSING ELECTROCHEMICAL REACTOR**

(71) Applicant: Universitat de Barcelona, 08028 Barcelona (ES); Nanjing University Of Science And Technology, Nanjing, Jiangsu 210094 (CN)
(72) Inventor: SIRÉS SADORNIL, Ignacio, 08028 Barcelona (ES); XU, Anlin, Nanjing, Jiangsu province 210094 (CN); BRILLAS COSO, Enrique, 08028 Barcelona (ES); HAN, Weiqing, Nanjing, Jiangsu province 210094 (CN)
(74) Representative: Curell Suñol S.L.P.

(57) **Abstract**

A water-processing electrochemical reactor that comprises a cylindrical inner anode (73), an outer tubular cathode (74), an intermediate chamber between the anode (73) and the cathode (74) and being crossed by the water, an outer shell (77) surrounding the cathode (74), a water inlet (71) and a water outlet (78), and a gas inlet (80) and gas outlet (79) connected to the gas chamber. The cathode surrounds the inner anode (73) and is porous to gas. A gas chamber is defined between the cathode (74) and the outer shell (77). The gas chamber contains a gas comprising oxygen and is at an overpressure that forces the gas through the porous cathode (74).

## Description

### TECHNICAL FIELD

The invention relates to a water-processing electrochemical reactor. The invention relates also to a process for the treatment of water in a water-processing electrochemical reactor. More precisely, the present invention describes a water-processing apparatus conveniently shaped/devised to promote a set of electrochemical advanced oxidation processes (EAOPs) based on in-situ H₂O₂ electrogeneration and, preferably, to be applied to the treatment of water and wastewater containing organic (or microbiological) contaminants by electro-Fenton (EF), photoelectro-Fenton (PEF) and solar photoelectro-Fenton (SPEF) processes.

### BACKGROUND ART

The issues related to anthropogenic water pollution and scarcity of clean water become a main challenge in the twenty-first century. These issues have promoted the development of advanced technologies for water and wastewater treatment, being worth highlighting EF, PEF and SPEF, which are based on the in-situ electrosynthesis of H₂O₂. Its catalytic decomposition in the presence of ferrous ion (Fe(II)), giving rise to the so-called Fenton's reagent, yields hydroxyl radicals (˙OH) for practical applications.

The research on electrosynthesis of H₂O₂ and electrochemical regeneration of Fe(ll) is hotspot in EF, PEF and SPEF devices. Several prospective electrochemical reactors for EAOPs have been developed, including one equipped with a tubular nanotube-based gas-diffusion membrane cathode (see documents H. Roth et al. and Y. Gendel et al. below), another equipped as an electrochemical H₂O₂ jet-cell or the conventional filter-press type electrochemical cells.

Y. Gendel, H. Roth, A. Rommerskirchen, O. David, M. Wessling, A microtubular all CNT gas diffusion electrode, Electrochem. Commun. 46 (2014) 44-47, describes microtubular gas diffusion electrodes made of multi-walled carbon nanotubes (MWCNT). This microtubular Gas Diffusion Electrode (GDE) was employed for the oxygen reduction reaction (ORR) in divided and undivided electrochemical cells. The new GDE can also be used for the fabrication of tubular electrochemical reactors, e.g. fuel cells, H₂O₂ generators or devices for CO₂ reduction and other processes.

Document H. Roth, Y. Gendel, P. Buzatu, O. David, M. Wessling, Tubular carbon nanotube-based gas diffusion electrode removes persistent organic pollutants by a cyclic adsorption - Electro-Fenton process, J Hazard Mater 307 (2016) 1-6 describes a tubular electrochemical cell which is operated in a cyclic adsorption - electro-Fenton (EF) process and by these means is the to overcome the drawbacks of the traditional EF process. A micro-tube made only of multi-walled carbon nanotubes (MWCNT) functions as a gas diffusion electrode (GDE) and highly porous adsorbent. In the process, the pollutants were first removed from the wastewater in the absence of current supply by adsorption on the MWCNT-GDE. Subsequently, the pollutants were electrochemically degraded in a defined volume of electrolyte solution using the EF process. Oxygen was supplied into the lumen of the saturated microtubular GDE, which was surrounded by a cylindrical anode made of Ti-mesh coated with Pt/IrO₂ catalysts. The MWCNT-GDE could be regenerated and be again available for adsorption.

Document US 3 793 173 A describes an electrolytic treatment of wastewater in which the reduction of oxygen on an activated carbon cathode is employed to form H₂O₂, which in turn serves to oxidize organic carbon pollutants in the wastewater. The wastewater treatment system includes a hollow porous active carbon cathode with central oxygen supply.

### SUMMARY OF INVENTION

An aspect of the present invention refers to a water-processing electrochemical reactor comprising:
- a cylindrical inner anode;
- an outer tubular cathode, that surrounds the inner anode, the cathode being porous to gas;
- an intermediate chamber between the anode and the cathode, the intermediate chamber being crossed by the water to be treated;
- an outer shell surrounding the cathode, where between the cathode and the outer shell a gas chamber is defined, this gas chamber containing a gas comprising oxygen, where the gas is at an overpressure that forces the gas through the porous cathode;
- a water inlet and a water outlet; and
- a gas inlet and a gas outlet connected to the gas chamber.

The reactor according to the invention has a plurality of advantages, in particular when the water treatment process comprises the promotion of an EF process. It allows good current and potential distribution and fluid dispersion. The absence of corners in the tubular reactor lowers the amount of low fluid velocity spots/regions and the swirl flow is promoted, which contributes to ensure a turbulent flow that is needed for perfect mixing (and hence, multiply the reactive events between the pollutants and the oxidants generated). Conventional filter-press cells are limited as for the volume that can be treated in continuous mode, because the distance between the electrodes (i.e., the interelectrode gap) is fixed and normally short (typically 1 cm as maximum, but usually lower). Due to this, they have to be used in stacks of multiple cells (usually in series, with outlet connected to next inlet), or it is necessary to operate in batch mode (with recirculation); the tubular reactor according to the invention has greater capacity and, depending on the required flow rate to be treated, could be operated in parallel mode. In addition, since a very small interelectrode gap is feasible, the ohmic drop can be lower than in most filter-press cells (thus reducing the cell voltage and hence, the electric cost). It must be taken into account that H₂O₂-based electrochemical advanced oxidation processes are indirect oxidation water treatments, being unnecessary that most of the volume contacts with the electrodes because the H₂O₂ (and OH derived from it) diffuses through the whole solution. The geometry, having an outer cathode and an inner anode means that the largest surface exposed to the main solution volume (i.e., the volume contained in the intermediate chamber) is that from the cathode, which is vital for the occurrence of the (re)generation of Fenton's reagents including Fe(ll) and H₂O₂. That is necessary to achieve a large removal of pollutants in Fenton-based EAOPs. The use of an air-diffusion cathode improves the H₂O₂ production and allows a high current efficiency during the EF process.

Preferably the cathode is not porous to water.

The gas comprising oxygen may be pure oxygen or any mixture comprising a sufficient amount of oxygen, as, for example, air.

In general, when in the present description and claims it is stated that the reactor comprises a certain element (a water inlet, a water outlet, a gas inlet, etc.) it has to be understood that it comprises at least one (i.e., one or more) of the cited element. For example, it is preferable that there are more than one gas inlets in order to distribute better the gas flow in the gas chamber.

Preferably the anode is a hollow cylinder with a plurality of openings in the cylinder's side walls, so that the water is able to flow from the interior of the cylinder to the intermediate chamber through the openings. This allows a less costly anode due to a reduction in the anode material (i.e., in the catalyst layer), it has a greater exposed surface and the water flow is improved. Advantageously the anode is additionally microporous (preferably fabricated by powder pressing), so that the water is able to flow from the interior of the cylinder to the intermediate chamber through the micropores of the anode. Nonetheless the reactor can accept other kinds of anodes that do not have a microporous structure. For example, carbonaceous cylinders, or Pt cylinders, or even boron-doped diamond (BDD) cylinders can be used. All these anodes could be just drilled cylinders or could be meshes or foams that already have the holes or pores to allow liquid flow.

Preferably the anode is composed of a titanium substrate (or other mechanically resistant material) coated with a metal or mixed-metal oxide. Other anodes are also possible and may be preferable in some cases. So, BDD is the best anode for generation of hydroxyl radicals at the anode surface from water oxidation. But it is expensive, and it is not easy to have cylinders because it is fragile. Pt is also a good alternative, but it is also expensive, although there are platinized materials that are cheaper, but still a bit expensive. Hence, when the main oxidation is reached thanks to Fenton's reaction in the bulk and taking into account that if higher oxidation ability is needed a PEF mode can be used, it is not necessary to invest so much on the anode.

Advantageously the cathode comprises a carbon cloth, coated with carbonaceous powder mixed with hydrophobizing material, preferably polytetrafluoroethylene (PTFE), and a metallic mesh as current collector, being the carbon cloth and the metallic mesh in contact with each other. This allows to have a thin cathode structure that improves the current and potential distribution. Preferably the collector is not stainless steel, which may leach iron that reacts with H₂O₂ via Fenton's reaction. The cathode according to the invention allows to have the mechanical stability and the hydrophobicity necessary so that the aerated part is always dry.

Preferably the coated carbon cloth is catalysed in order to enhance the H₂O₂ electrogeneration.

Preferably the outer shell is transparent. This allows an easy control of possible flooding and humidity accumulations which is important for the performance of the GDE.

Advantageously the reactor according to the invention further includes a UV source irradiating the intermediate chamber and/or it further comprises a photoreactor. Preferably the photoreactor is a UV photoreactor comprising a UV source or a solar photoreactor.

Preferably the treatment is in continuous mode, i.e., is a continuous treatment.

Advantageously the distance between the anode and the cathode is below 10 mm and preferably between 1 and 2 mm. In fact, it can be operated with larger interelectrode gaps (15, 20 mm, etc.), but these preferred solutions reduce the cell voltage and the energy consumption.

Preferably the reactor according to the invention further comprises a gas inlet and a gas outlet connected to the gas chamber.

Another aspect of the invention refers to a process for the treatment of water in a water-processing electrochemical reactor according to the invention, where the process comprises the following steps:
- supplying a gas comprising O₂ through the gas inlet;
- passing water to be treated through the reactor;
- supplying an electric current between the cathode and the anode; and
- treating the water.

Preferably the process according to the invention further comprises the promotion of an EF process with the H₂O₂ electrogenerated in the reactor. Preferably the EF process is catalysed using Fe(ll) present in the water, with the generation of ˙OH by Fenton's reaction. In fact, ˙OH is the main radical but not the only one produced, so it has to be understood that the "generation of ˙OH" means the "generation of ˙OH as main oxidant".

Soluble or insoluble forms of Fe(ll) species can be employed as catalyst, in order to perform homogeneous or heterogeneous EF process. Alternatively, the catalyst can be supported on the cathode. Other metal catalysts may also be used, as, for example, Cu(I).

Advantageously the water is wastewater comprising organic matter and the process includes degrading the organic matter through OH. Alternatively, the treatment can be an electrochemical disinfection treatment or a water purification treatment.

In the case where the process comprises the promotion of an EF process with the H₂O₂ electrogenerated in the reactor, preferably a source of Fe(II) is added to the water to be treated before entering the reactor. In any case (with the addition of a source of Fe(II) or not), the Fe(ll) concentration is preferably between 0.15 mM and 1 mM, and more preferably between 0.15 mM and 0.60 mM (the exact value will depend on the case). In fact, continuous Fe(ll) regeneration is feasible upon reduction of Fe(III) at the cathode. This allows the use of a low amount of Fe(II). Preferably the process includes a step of photoreduction of Fe(III) by irradiating the water (in the intermediate chamber or in a separate photoreactor) with UV photons (from a UV source or from natural or simulated solar radiation). This allows to still further reduce the amount of Fe(II) needed.

Advantageously the electric current accounts for a cathodic current density ranging from 5 mA cm⁻² to 150 mA cm⁻².

Preferably the process is applied in a continuous mode.

Preferably the pH of the influent is adjusted between 2.6 and 3.0, and preferably between 2.8 and 3.0. This is a preferred value when usual Fe (II) salts are employed, but other iron forms can be alternatively used as catalyst: (i) If some chelator is added to have a soluble Fe(II) or Fe(III) complex, pH can be much wider, reaching alkaline values; (ii) if iron minerals or other heterogeneous iron catalysts are employed, pH can also be wide. These other forms may represent preferred alternatives in some cases.

Another aspect of the present invention refers to the use of a water-processing electrochemical reactor according to the invention for the treatment of water through a process according to the present invention, preferably for the treatment of wastewater comprising organic matter, for an electrochemical disinfection treatment and/or a water purification treatment, and more preferably through an EF process.

### BRIEF DESCRIPTION OF DRAWINGS

Other advantages and features of the invention can be seen from the following description in which the preferred embodiment/embodiments of the invention are described in reference to the attached drawings in a non-limiting manner. In the drawings:
Fig. 1 is a sketch of the setup with a tubular reactor according to the invention.
Fig. 2 represents the tubular reactor of Fig. 1.

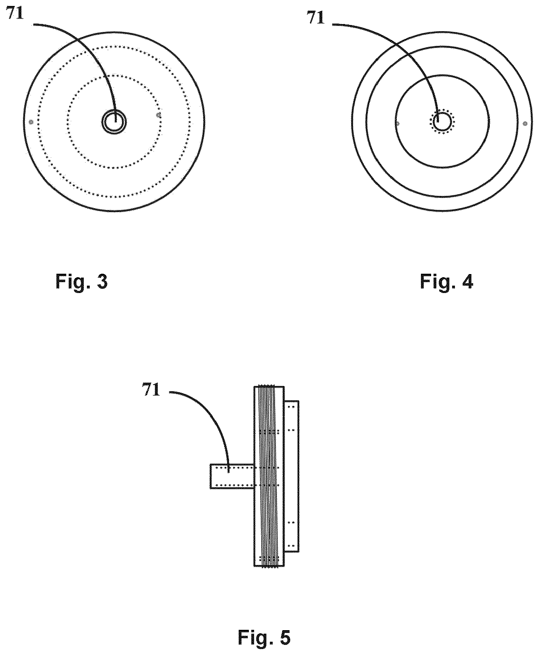

Figs. 3, 4 and 5 show a front, bottom and side view, respectively, of the inlet end of the tubular reactor of Fig. 2.

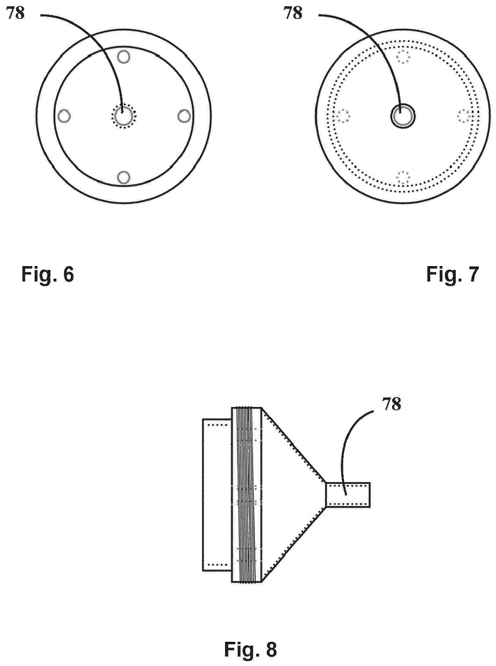

Figs. 6, 7 and 8 show a bottom, front and side view, respectively, of the outlet end of the tubular reactor of Fig. 2.

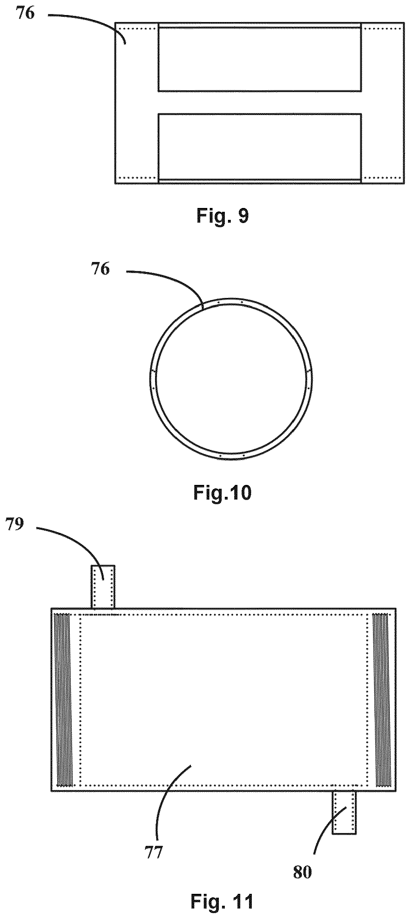

Figs. 9 and 10 show a side and front view, respectively, of the cathode holder of the tubular reactor of Fig. 2.
Fig. 11 shows a view of a longitudinal section of the transparent outer shell.
Fig. 12 shows H₂O₂ accumulation, specific conductivity (κ), energy consumption (EC) and current efficiency (CE) determined in different electrolytes.
   Conditions: cathodic current density (j_{cath}) of 20 mA cm⁻², liquid flow rate of 2 L h⁻¹, inlet air flow rate of 4 L min⁻¹, pH 3.0, room T.
Fig. 13, Concentration of dissolved Fe²⁺ and Fe³⁺ ions at 40 min, as a function of j_{cath} in EF and PEF processes. Conditions are: 50 mM Na₂SO₄, 15 mg L⁻¹ benzotriazole (BTR), -5.5 mg L⁻¹ Fe²⁺ (0.1 mM) added at 0 min, liquid flow rate of 2 L h⁻¹, inlet air flow rate of 4 L min⁻¹, pH 3.0, room T.
Fig. 14, (a) BTR and (b) total organic carbon (TOC) abatement by different processes (electro-oxidation (EO), EF and PEF) along time (t), as a function of the liquid flow rate. Conditions are: 50 mM Na₂SO₄, 15 mg L⁻¹ BTR, -5.5 mg L⁻¹ Fe²⁺ (0.1 mM) added at 0 min (in EF and PEF), j_{cath} of 20 mA cm⁻², inlet air flow rate of 4 L min⁻¹, pH 3.0, room T.
Fig. 15, (a) BTR and (b) TOC abatement by different processes (EO, EF and PEF) along time (t). Conditions are: 15 mg L⁻¹ BTR in urban wastewater, -5.5 mg L⁻¹ Fe²⁺ (0.1 mM) in EF and ∼5.5-55.0 mg L⁻¹ Fe²⁺ (0.1-0.5 mM) in PEF added at 0 min, j_{cath} of 20 mA cm⁻², liquid flow rate of 2 L h⁻¹, inlet air flow rate of 4 L min⁻¹, pH 3.0, room T.

### DESCRIPTION OF EMBODIMENTS

This application discloses a novel reactor with ability for degradation and mineralization of organic (or microbiological) toxic contaminants from water. The novel reactor has a tubular air-diffusion cathode for water treatment (preferably in continuous mode), which moreover can be applied in the PEF (and other H₂O₂-based EAOPs) treatment for water decontamination and disinfection at low input current (and hence, low energy consumption).

A tubular electrochemical reactor devised to carry out EF, PEF or other H₂O₂-based EAOPs is disclosed, which includes: a cylindrical inner anode (a drilled metal oxide membrane anode, which can provide O₂ from simultaneous H₂O oxidation); an outer tubular air-diffusion cathode (to generate H₂O₂) in contact with a tubular metallic mesh (as current collector), as triple-phase boundary electrode; an outer tubular gas chamber (between the cathode and a transparent outer shell). Anode, cathode and gas chamber are assembled in a casing-type, in a concentric fashion; both sides are sealed with screwing inlet and screwing outlet; and the outer packaging shell is installed with inlet and outlet for gas feeding with compressed atmospheric air (from an air pump) and flow rate regulated with a backpressure gauge; and two titanium wires are connected to anode and cathode to supply DC current from a power supply.

Several process parameters can be adjusted within a wide range: pH value (depending on type of Fenton's catalyst), conductivity (low interelectrode gap that allows operating with solutions of low conductivity), irradiation with UV or sunlight, etc. The whole system includes a reservoir to store the solution to be treated; the tubular reactor for the eletrogeneration of Fenton's reagents (feasibility of Fe(ll) electroregeneration as well) connected to the reservoir by a magnetic pump, with flowrate controlled by a flowmeter; an air pump to provide compressed air to the electrochemical reactor outer shell through an inlet, with pressure and flow rate regulated by a backpressure gauge at the outlet; an optional photoreactor (glass tubes irradiated and connected to the outlet of the electrochemical reactor, to operate under continuous PEF conditions; as an alternative, a batch photoreactor to increase the residence time); a reservoir tank connected to the outlet of the photoreactor (or the electrochemical reactor if UV irradiation is not needed).

The present prototype of electrochemical reactor consists of a central porous titanium-based metal oxide (cylinder) anode and a rolled air-diffusion electrode (i.e., placed coaxially) fed with air from an outer shell (casing). It has a capacity of about 150 mL and can treat up to 10 L h⁻¹ of water.

The electrochemical reactor has been operated:
(i) with only H₂O₂ electrogeneration (i.e., EO process with H₂O₂ generation);
(ii) in EF mode (with Fe(II) addition to the solution to be treated); and
(iii) it has also been connected to a photo-Fenton reactor, giving rise to a PEF unit (if desired or needed).

As will be explained in more detail below, the new reactor is able:
a) to produce H₂O₂ continuously upon current supply and air feeding;
b) to reduce more than 50% metal catalyst need (Fe(II)) typically reported in EF and PEF treatments with air-diffusion cathodes, thanks to regeneration;
c) to completely degrade a model organic pollutant in conductive ultrapure water, in a single passage, upon application of EF process (addition of metal catalyst); and
d) to ensure more than 50% mineralization of solutions with the same model organic pollutant in conductive ultrapure water, in a single passage, upon coupling of the electrochemical reactor with a UV photoreactor (PEF process with UV light or solar photoreactor (SPEF process).

### Dimensions for the tubular reactor and setup

### 1 - Reactor dimensions:

**Table 1. Detailed parameters of the reactor**

| **Parameter Name** | | | |
|---|---|---|---|
| Area / cm² | Cathode | | 81 |
| | Total Anode (16 holes, ϕ6mm each) | | 129 |
| | | Outer surface | 71 |
| | | Inner surface | 58 |
| Volume / mL | Total Volume | | 159 |
| | | Between cathode and Outer anode surface | 49 |
| | | Inside the anode | 110 |
| Distance / cm | Anode-Cathode (but it can be decreased significantly) | | 0.9 |
| Dimensions | Anode (inner) / cm | | L10 x Φ2.5 |
| | Anode (outer) / cm | | L10 x Φ3.0 |
| | Cathode / cm | | L7 (with 4 active parts of W2.9) |

### Liquid flow rate:

Continuous system (tests: 1-3 L h⁻¹). The reactor is intended to work in continuous mode.

However, the convenience of recirculation will depend on the desired removal percentage (when the reactor is used for water or wastewater treatment). Therefore, the inclusion of a recirculation can be a preferred option in certain cases.

### Air flow rate:

It is regulated in order to control flooding and humidity in the dry side of the cathode (the one facing the shell). The air pump is connected to the shell inlet through a tube with a valve (in order to minimize excessive air feeding). A tube with a valve is also connected to the shell outlet in order to have enough pressure inside.

### Anode:

A tubular porous electrode made of a titanium substrate coated with RuO₂ was selected as the anode. As a porous electrode, it provided a large surface area and performance, having superior electrocatalytic activity for direct and indirect oxidation. The anode was drilled to form 16 small holes (ϕ6mm, placed perpendicularly facing 4 to 4) to ensure the uniform distribution of solution, avoid pressure problems and allow the interaction between OH and organic molecules in the reactor volume.

### Cathode:

A carbon cloth (or carbon paper is also possible) coated with carbon-PTFE dispersion (raw carbon was employed here, but modified carbons could also be used to enhance the electrocatalytic activity to produce H₂O₂ and to reduce Fe(III); and PTFE could be replaced by another polymer to hydrophobize the cathode). The material was rolled, in contact with a conductive metal mesh. Careful sealing must be ensured.

### Catalyst:

Normally, soluble Fe(ll) was used as catalyst (from a salt), but other forms of soluble (i.e., chelated/complexed Fe(II) or Fe(III)) or insoluble (synthetic and natural iron oxides, or other forms of solid iron) iron could be used instead, to perform homogeneous or heterogeneous Fenton processes. These alternatives forms of iron are good to work at natural pH, without needing to adjust pH to 3.0, although pH ∼ 3.0 is the optimum for Fenton's reaction (homogeneous Fenton process) and it is the value selected in this study.

### UV Lamp:

A photocatalysis unit/reactor with UV lamp, connected to the electrochemical reactor outlet, can be included to perform PEF process. This is based on the occurrence of photo-Fenton reaction (i.e., photoreduction of Fe(III) to Fe(II)), and also promotes the photodecarboxylation of stable complexes of Fe(III) with refractory short-chain aliphatic carboxylates like oxalate. Herein, we choose the lined glass tubes as photo-Fenton reactor. Actually, multiple forms of photo-Fenton reactor can be used instead, such as glass/quartz batch reactors, plate-overflow vessel with a slope, etc. UV light can be replaced by sunlight to give rise to SPEF process.

### 2 - Installation of reactor

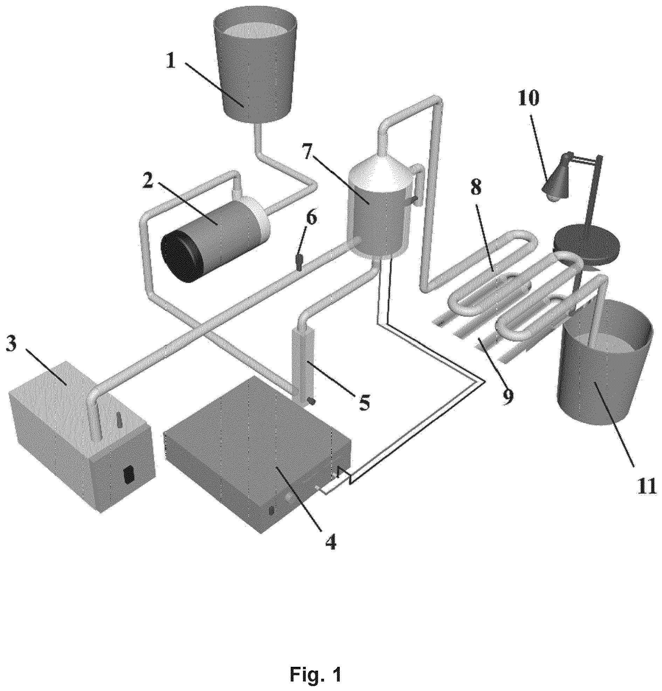

Fig. 1 shows a sketch of the setup with a tubular reactor according to the invention. It comprises:
(1) Influent tank;
(2) Pump;
(3) Air pump/compressor;
(4) Power supply;
(5) Flowmeter;
(6) Gas valve;
(7) Tubular reactor;
(8) Photoreactor;
(9) Mirror;
(10) UV source;
(11) Effluent tank.

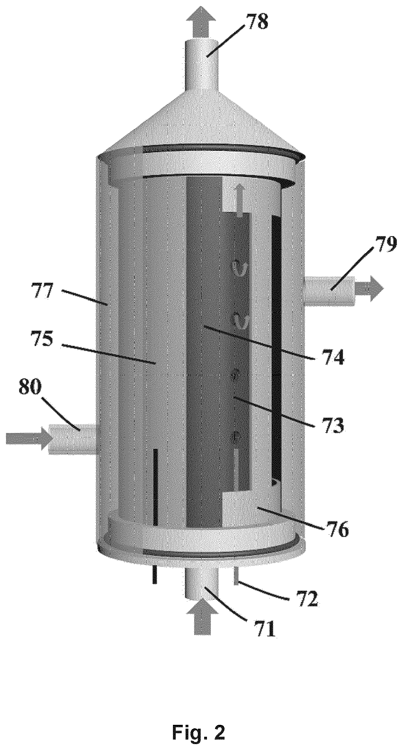

Fig. 2 shows a detailed view of the tubular reactor. It comprises:
(71) Water inlet;
(72) Wire (electric connection to anode);
(73) Cylindrical inner anode;
(74) Carbonaceous GDE as outer tubular cathode;
(75) Metallic mesh as current collector;
(76) Cathode holder;
(77) Transparent outer shell;
(78) Water outlet;
(79) Gas pipeline as gas outlet.
(80) Gas pipeline as gas inlet.

The reactor is thus divided into four pieces:
- inlet and central anode;
- outer rolled cathode (on a holder, to keep the shape);
- transparent gas chamber shell; and
- outlet.

Inlet and outlet conic parts are screwed on the shell body.

### Experimental results

### 1. H₂O₂ production

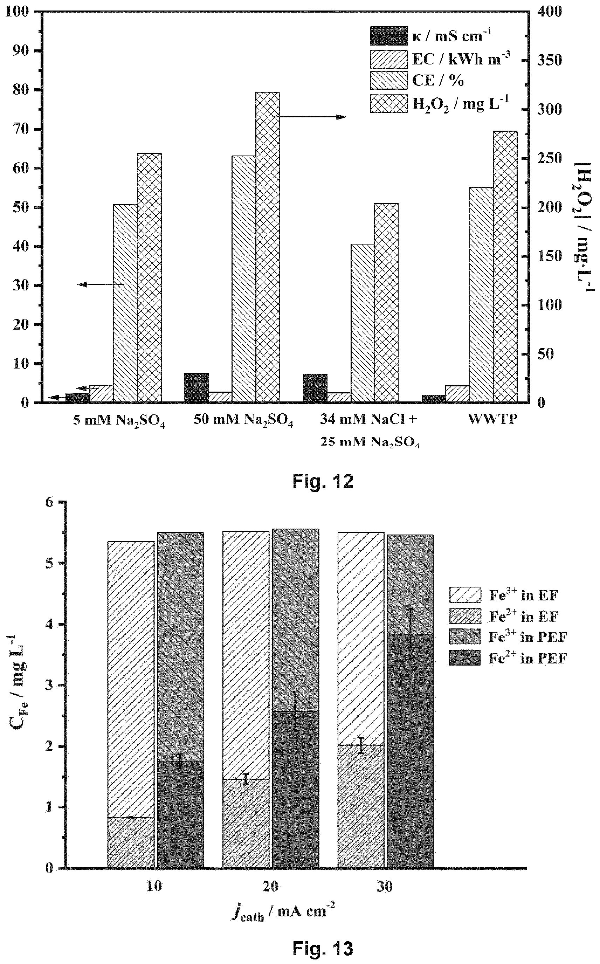

The ultimate goal of the reactor is not H₂O₂ production itself. Nonetheless, with this reactor, the continuous H₂O₂ electrogeneration was ensured in different electrolytic media, which is crucial for subsequent application in Fenton-based EAOPs. Figure 12 shows the effect of electrolyte composition (pure Na₂SO₄ at different concentrations from 5 to 50 mM, mixed sulfate-chloride medium and real wastewater from a municipal wastewater treatment plant) on the H₂O₂ accumulation (fourth bar, right Y axis). The small interelectrode gap allowed that a good H₂O₂ production was feasible even in low conductivity media. On the other hand, the presence of chloride affects the H₂O₂ accumulation, due to the concomitant production of active chlorine at the anode that further reacts with H₂O₂. Figure 12 also shows the conductivity (κ) of the different electrolytes (first bar, left Y axis) and the effect of electrolyte composition on energy consumption (EC) (second bar, left Y axis) and current efficiency (CE) (third bar, left Y axis).

### 2. Fe(ll) regeneration

Second, continuous iron reduction from Fe(III) formed from Fenton's reaction to Fe(ll) was ascertained, which can be accounted for the large surface area of the air-diffusion cathode. In Figure 13, the speciation of iron is depicted, at different current densities (j). A higher current density favored the regeneration. Also, UV photons in PEF process enhanced the regeneration, thus promoting both, electroreduction and photoreduction of Fe(III). These results ensure that, in this reactor, a catalytic amount of dissolved Fe(II) is always present, thus allowing the occurrence of Fenton's reaction.

### 3. BTR degradation

BTR is widely used as corrosion inhibitor. It is not readily (bio)degradable. Hence, it is only partly removed in wastewater treatment plants and a substantial fraction reaches surface water. The inventors carried out the degradation of 15 mg L⁻¹ BTR solutions by EO, EF and PEF. The j_{cath} and Fe(ll) catalyst concentration (needed in EF and PEF) were optimized, obtaining these values: 20 mA cm⁻² and 0.1 mM (i.e., -5.5 mg L⁻¹) Fe²⁺.

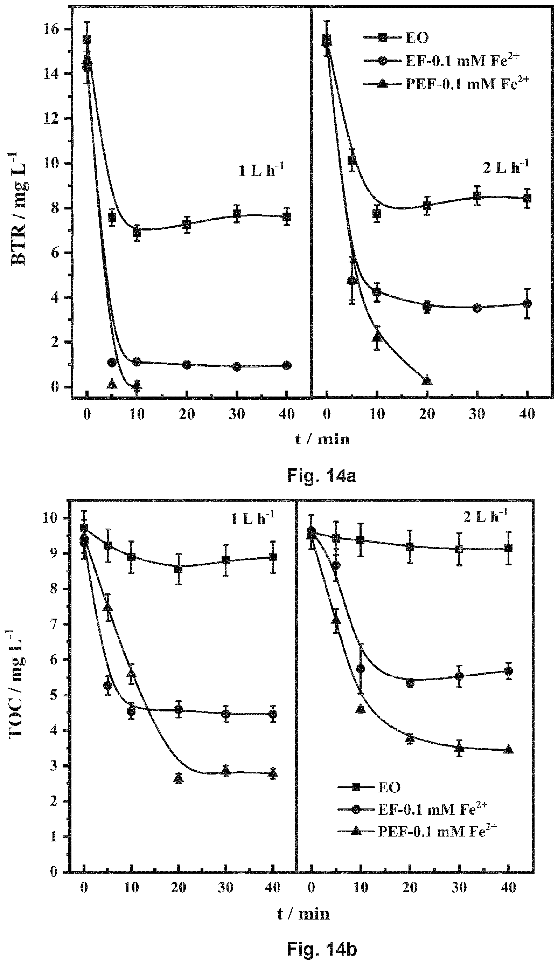

Figure 14 shows the degradation of BTR solutions by the three processes at different flow rates (1 and 2 L h⁻¹). In Figure 14a, BTR removal followed by HPLC; in Figure 14b, TOC removal. The optimum flow rate depends on the goal: for only pollutant removal, 2 L h⁻¹ is preferable; if TOC removal is needed, the reactor must be operated at a lower flow rate of 1 L h⁻¹. The largest combined removals were obtained at 1 L h⁻¹: 100% BTR removal and 71% TOC removal.

### 4. BTR degradation in urban wastewater

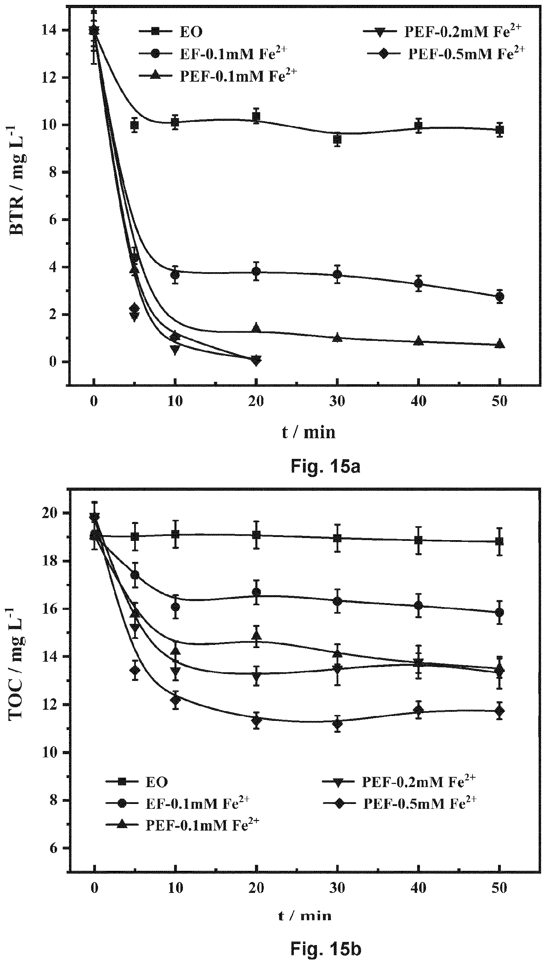

BTR was also treated in urban wastewater by the different processes. As shown in Figure 15a, total BTR removal was also feasible in this medium by PEF, showing a similar rate to that observed in Na₂SO₄ medium thanks to the generation of active chlorine, which counterbalanced the presence of scavengers associated to natural organic matter (NOM) from the real water matrix. The use of 0.2 mM Fe²⁺ instead of 0.1 mM contributes to reach a quicker removal in PEF. On the other hand, TOC removal (Figure 15b) was slightly lower, as expected from the formation of recalcitrant chlorinated by-products. The increase of Fe²⁺ concentration to 0.5 mM enhanced the TOC abatement up to 40%. Note that the initial TOC in these experiments was higher than in Figure 14 due to the contribution of the aforementioned NOM components.

### 5. Toxicity assessment

The toxicity evolution during the treatments in urban wastewater was evaluated via Microtox® method. EC₅₀ values of different samples allowed concluding that:
- The addition of BTR to urban wastewater increased the toxicity markedly, which justifies the need for an effective water treatment.
- The EF treatment decreased the toxicity (EC₅₀ increase), which means that BTR and some of the organic compounds in wastewater were degraded.
- The PEF treatment was the most effective to decrease the toxicity (largest increase of EC₅₀), ending in a relatively harmless solution, which means that most of the potentially toxic organochlorinated compounds are destroyed in PEF.

### Acronym list

BDD boron-doped diamond
BTR benzotriazole
CE current efficiency
EAOP electrochemical advanced oxidation process
EC energy consumption
EF electro-Fenton
EO electro-oxidation
GDE gas diffusion electrode
MWCNT multi-walled carbon nanotube
NOM natural organic matter
ORR oxygen reduction reaction
PEF photoelectro-Fenton
PTFE polytetrafluoroethylene
SPEF solar photoelectro-Fenton
TOC total organic carbon

## Claims

1. A water-processing electrochemical reactor comprising:
- a cylindrical inner anode (73);
- an outer tubular cathode (74) that surrounds the inner anode (73), the cathode (74) being porous to gas;
- an intermediate chamber between the anode (73) and the cathode (74), the intermediate chamber being crossed by the water;
- an outer shell (77) surrounding the cathode (74), where between the cathode (74) and the outer shell (77) a gas chamber is defined, the gas chamber containing a gas comprising oxygen, the gas being at an overpressure that forces the gas through the porous cathode (74);
- a water inlet (71);
- a water outlet (78); and
- a gas inlet (80) and a gas outlet (79) connected to the gas chamber.

2. The reactor according to claim 1, wherein the anode (73) is a hollow cylinder with a plurality of openings in the cylinder's side walls, so that the water is able to flow from the interior of the cylinder to the intermediate chamber through the openings.

3. The reactor according to claim 2, wherein the anode (73) is microporous, so that the water is able to flow from the interior of the cylinder to the intermediate chamber through the micropores of the anode (73).

4. The reactor according to any one of claims 1 to 3, wherein the anode (73) is of a titanium-based metal or mixed-metal oxide.

5. The reactor according to any one of claims 1 to 4, wherein the cathode (74) comprises a carbon cloth, coated with carbonaceous powder mixed with hydrophobizing material, preferably polytetrafluoroethylene, and a metallic mesh (75) as current collector, being the carbon cloth and the metallic mesh in contact with each other.

6. The reactor according to claim 5, wherein the coated carbon cloth is catalysed.

7. The reactor according to any one of claims 1 to 6, wherein the outer shell (77) is transparent.

8. The reactor according to any one of claims 1 to 7, further including a UV source irradiating the intermediate chamber.

9. The reactor according to any one of claims 1 to 8, further comprising a photoreactor (8).

10. The reactor according to any one of claims 1 to 9, wherein the distance between the anode (73) and the cathode (74) is below 10 mm, and preferably between 1 and 2 mm.

11. A process for the treatment of water in a water-processing electrochemical reactor according to any one of claims 1 to 10, the process comprising the steps of:
- supplying a gas comprising O₂ through the gas inlet;
- passing water to be treated through the reactor;
- supplying an electric current between the cathode (74) and the anode (73); and
- treating the water.

12. The process according to claim 11, further comprising the promotion of an EF process with the H₂O₂ electrogenerated in the reactor.

13. The process according to claim 12, wherein the EF process is catalysed using Fe(II) present in the water, with the generation of OH by Fenton's reaction.

14. The process according to claim 13, wherein a source of Fe(II) is added to the water to be treated before entering the reactor.

15. The process according to any one of claims 11 to 14, wherein the treatment is a continuous treatment.
